# EUROPÄISCHE PATENTSCHRIFT

(11) **EP 1 594 669 B1**
(45) Veröffentlichungstag und Bekanntmachung des Hinweises auf die Patenterteilung: **20.05.2009**
(21) Anmeldenummer: 04705804.5
(22) Anmeldetag: 28.01.2004
(51) Int. Cl.: B29C 45/00, B29C 45/27, B22D 17/30, B28B 3/26

(54) **SPRITZEINHEIT MIT ROTIERENDEM VENTIL ZUR VERARBEITUNG SCHMELZBARER MATERIALIEN**
INJECTION UNIT WITH A ROTATING VALVE FOR PROCESSING MELTABLE MATERIALS
UNITE D'INJECTION A SOUPAPE ROTATIVE POUR TRAITER DES MATIERES FUSIBLES

(30) Priorität: 22.02.2003 DE 10307616
(43) Veröffentlichungstag der Anmeldung: 16.11.2005
(73) Patentinhaber: Merck Patent GmbH, 64293 Darmstadt (DE)
(72) Erfinder: EDLER, Gerhard, 65468 Trebur (DE); KEIM, Hans-Joachim, 70193 Stuttgart (DE)
(86) Internationale Anmeldenummer: PCT/EP2004/000718
(87) Internationale Veröffentlichungsnummer: WO 2004/073950

(56) Entgegenhaltungen:
- EP-A- 0 542 505
- WO-A-99/10157
- DE-A- 3 228 421
- DE-U- 9 206 980
- GB-A- 865 403
- US-A- 4 242 073
- PATENT ABSTRACTS OF JAPAN vol. 1998, no. 05, 30. April 1998 (1998-04-30) -& JP 10 015998 A (DAIKYO INC), 20. Januar 1998 (1998-01-20)
- PATENT ABSTRACTS OF JAPAN vol. 018, no. 173 (M-1581), 24. März 1994 (1994-03-24) -& JP 05 337990 A (MITSUBISHI GAS CHEM CO INC), 21. Dezember 1993 (1993-12-21)

## Beschreibung

### Stand der Technik

Die Erfindung geht aus von einer Spritzeinheit für Anlagen zur Verarbeitung schmelzbarer Materialien, beispielsweise thermoplastischer Kunststoffe, keramischer oder metallischer Massen o. dgl. nach der Gattung des Hauptanspruches. Derartige Verarbeitungsanlagen sind beispielsweise als Spritzgieß- oder auch Extrusionsanlagen für den Bereich der Kunststoffverarbeitungsanlagen sowie als Spritzgussanlagen für keramische und metallische Massen bekannt. Bei diesem Prinzip der Formteilherstellung werden entsprechend der zu fertigenden Formteile ausgebildete Formhohlräume mit Schmelze gefüllt. Die Spritzeinheit ist dabei der Teil des Heißkanals, durch den die Schmelze bei der für den jeweiligen Stoff erforderlichen Verarbeitungstemperatur mit niedrigem oder hohem Druck gefördert wird und über Düsen in den Formhohlraum gelangt. Zur Gewährleistung einer hohen Produktqualität, d. h. sowohl einer im gesamten Formteil ausreichenden Festigkeit als auch einer optischen Einheitlichkeit, ist es notwendig, an den Bindenähten, das sind die Stellen im Formteil, an denen die zuvor getrennten Schmelzeströme wieder aufeinanderstoßen, eine innige Vermischung der Schmelzeströme zu erreichen. Hierzu ist es bereits bekannt, die einzelnen Schmelzestränge mindestens abschnittsweise in Schwingung bzw. Pulsation zu versetzen, wodurch sich die Schmelzen im Bereich der Bindenähte aufgrund der Schwingungsunterschiede durchdringen und die Bindenähte an der Fügestelle der Schmelzestränge eine intensive Verbindung miteinander eingehen (DE 100 52 841 A1). In dieser Veröffentlichung ist auch eine Kunststoffverarbeitungsanlage mit einer Kunststoffspritzgießmaschine, mit einem einen Hohlraum für die Spritzform aufweisenden Spritzwerkzeug und mit mindestens zwei je einen Steuermechanismus aufweisenden Spritzventilen für entsprechend in den Hohlraum mündende Spritzdüsen beschrieben. Die Ventile sind durch den Steuermechanismus unabhängig vom Spritzdruck auf oder zu steuerbar, wobei der Steuermechanismus der einzelnen Ventile untereinander synchronisiert ist. Die einfachste Form eines Ventils ist eine Ventilnadel mit auf ihrer Mantelfläche angeordneter Schrägnut. Funktionstechnisch günstiger ist allerdings die ebenfalls beschriebene Verwendung von wälzgelagerten Drehschiebern mit T-förmigen Steuerkanälen. Der Nachteil dieser Lösungen besteht in dem verhältnismäßig hohen Aufwand, den diese Spritzeinheit erfordert. Immerhin herrschen in der Spritzeinheit Drücke in Höhe von bis zu 3000 bar. Die rotierenden Ventilnadeln bzw. Drehschieber müssen gegenüber dem Gehäuse abgedichtet werden, was die Spritzeinheit wiederum verteuert. Hinzu kommt der Aufwand für die Synchronisation, die in jedem Fall ein Getriebe erfordert. Nachteilig ist ferner der Platzbedarf, den diese Konstruktion erfordert. Die Raumkapazität im Heißkanal ist begrenzt. Schließlich ist der Aufwand für die Wärmedämmung zu nennen, der jeweils für zwei rotierende Teile zu betreiben ist.

Bekannt ist ferner eine rotierende Spritzgießeinrichtung für geregelte Spritzgielibedingungen bei der Formgebung durch einfaches und effektives Schalten eines Formmassestroms zum Einspeisen in einen Formhohlraum bei jeder Rotationsoperation der Form. Hierbei rotieren mehrere Formbetten um eine zentrale Zuführung. Bei der gezeigten Rotationsspritzgießeinrichtung sind drei Formbetten an einem Rotor angeordnet, d. h. der Rotor verbindet die einzelnen Formen in drei 120°-Schritten nacheinander mit dem Angusskanal. Die Formmasse gelangt dabei über die im Fall des Weiterschaltens des Rotors mitdrehenden Formmassekanäle in die Formen (JP 10015998).

Schließlich ist eine Spritzgießeinrichtung und ein Verfahren zur Herstellung eines Spritzgießerzeugnisses bekannt, bei dem zur Verbesserung der Bindenahtfestigkeit und des Aussehens, zur Vermeidung innerer Fehlstellen und zur Gewährleistung einer größtmöglichen Dimensionstreue die molekulare Orientierung der Formmasse, insbesondere die Orientierung der Füllstoffe, durch Aufbringen von Scherkräften auf mindestens einen Teil der Formmasse beeinflusst wird. Die Scherkräfte werden mittels abwechselnd in der Vorrichtung agierender Kolben aufgebracht. Hierzu geben zwei Wegeventile abwechselnd die zur Form führenden Heißkanäle frei (JP 05337990).

### Die Erfindung und ihre Vorteile

Durch die erfindungsgemäße Spritzeinheit mit dem kennzeichnenden Merkmalen des Hauptanspruchs reduziert sich der Aufwand für Abdichtung, Wärmedämmung und antrieb auf nur ein rotierendes Bauteil je Formhohlraum versorgendes Kanalsystem. Außerdem entfällt die Synchronisation der Rotation von zwei Ventilnadeln bzw. Drehschiebern, die den gleichen Formhohlraum mit Schmelze versorgen. Dies wurde dadurch erreicht, dass die Schmelze direkt in eine rotierende Hohlspindel gelangt und von dieser durch mindestens einen radial nach außen geführten Verteilerkanal zu den in den Formhohlraum mündenden düsen gelangt. Das bedeutet, dass pro einander zugeordneter Schmelzestränge, also für jene Schmelzestränge, die ein Kanalsystem bilden und in ein und denselben Formhohlraum wieder zusammengeführt werden, lediglich ein rotierendes Ventilglied, d. h. eine Hohlspindel, vorgesehen ist. Die Hohlspindel hat somit zwei Aufgaben zu erfüllen, nämlich die Leitung des Schmelzestromes zu mindestens zwei Kanälen und die Unterbrechung des Schmelzestromes zur Erzeugung der Pulsation. Natürlich ist es auch denkbar, dass von einer Hohlspindel mehrere Kanalsysteme versorgt werden. Dabei ist es ohne Bedeutung, ob die Kanalsysteme einen oder mehrere Formhohlräume mit Schmelze versorgen.

Nach einer vorteilhaften Ausgestaltung der Erfindung weist die Hohlspindel zwei radial nach außen verlaufende Verteilerkanäle auf, die nicht in demselben Winkel wie die von ihnen mit Schmelze zu versorgenden Kanäle zueinander angeordnet sind. Liegen beispielsweise die beiden Kanäle genau einander gegenüber, so muss der Winkel zwischen den beiden Verteilerkanäle ungleich 180° sein, damit das Füllen der beiden Kanäle zeitlich nacheinander erfolgt. Die Anordnung von mehr als einem Verteilerkanal hat den Vorteil, dass die Pulsationsfrequenz ohne Veränderung der Drehzahl der Hohlspindel erhöht werden kann.

Nach einer weiteren vorteilhaften Ausgestaltung der Erfindung sind die Verteilerkanäle in übereinanderliegenden Ebenen der Hohlspindel angeordnet wenn auch die Kanäle übereinander angeordnet sind.

Weitere Vorteile und vorteilhafte Ausgestaltungen der Erfindung sind der nachfolgenden Beispielbeschreibung und den Ansprüchen entnehmbar.

Ein Ausführungsbeispiel der Erfindung ist im Folgenden näher beschrieben.

Eine Spritzeinheit, die düsenseitig für eine Spritzgießmaschine als Werkzeugaufspannplatte dient, besteht aus einer Aufspannplatte und einer Zwischenplatte, die mittels Führungssäule und Zylinderschrauben fest miteinander verbunden sind. Die Spritzeinheit ist über eine Isolierplatte gegenüber den angrenzenden Teilen der Spritzgießmaschine thermisch isoliert. Unterhalb der Zwischenplatte schließt sich der nicht näher dargestellte Formhohlraum an, in den zwei Zuführkanäle münden. Im Innern der Zwischenplatte befindet sich ein Heizblock, der von Heizpatronen auf Schmelzetemperatur gehalten wird. Zentraler Bestandteil der Spritzeinheit ist eine Hohlspindel, die in dem Heizblock mittels einer Verschleißbuchse sowie eines Lagerringes geführt ist. Im Bereich der Aufspannplatte ist ein Kettenrad über eine Feder-Nut-Verbindung drehfest mit der Hohlspindel verbunden. Die Lagerung von Hohlspindel und Kettenrad in der Aufspannplatte erfolgt mittels einer Lagerplatte sowie Rillenkugellagern. Eine zusätzliche Führung erhält die Hohlspindel im Übergangsbereich von der Aufspannplatte zur Zwischenplatte durch eine Führungshülse, einen Abstützring sowie einen Anlaufring. Der Hohlraum der Hohlspindel ist mit dem Druckkanal der Spritzgießmaschine verbunden, so dass die Schmelze in selbigen gelangt. Der Druckkanal geht nach einer kurzen axialen Führung in einen radialen Verteilerkanal über.

Nachfolgend soll die Wirkungsweise der Erfindung näher beschrieben werden. Das Kettenrad und damit auch die Hohlspindel wird im vorliegenden Beispiel mittels einer nicht dargestellten Kette von einem ebenfalls nicht gezeigten Getriebemotor angetrieben. Dadurch verbindet der Verteilerkanal der Hohlspindel abwechselnd die beiden Zuführkanäle mit dem Druckkanal, so dass der Schmelzestrom, aufgeteilt in zwei Teilschmelzeströme, pulsierend in den Formhohlraum gelangt. Die Hohlspindel hat demnach eine Doppelfunktion, nämlich die des Verteilens der Schmelze auf mindestens zwei Zuführkanäle und der Erzeugung der Pulsation. Im vorliegenden Beispiel weist die Hohlspindel lediglich einen radialen Verteilerkanal auf, d. h. bei einer Umdrehung der Hohlspindel wird jeder der Zuführkanäle auch nur einmal mit dem Druckkanal verbunden. Die Pulsationsfrequenz eines Zuführkanals entspricht demzufolge der Drehzahl der Hohlspindel, wobei die Druckstöße jeweils um 180° phasenverschoben sind. Werden in einer Ebene mehr als ein Verteilerkanal vorgesehen, müssen diese immer in einem anderen Winkel zueinander stehen als die in dieser Ebene befindlichen Zuführkanäle, d. h. es muss gewährleistet sind, dass immer dann, wenn ein Zuführkanal gerade mit dem Druckkanal verbunden ist, der andere durch den Mantel der Hohlspindel verschlossen ist.

## Patentansprüche

1. Spritzeinheit mit rotierendem Ventilglied zur Verarbeitung schmelzbarer Materialien mit
- einem Druckkanal für die Schmelze,
- einem oder mehreren Formhohlräumen und
- einem den oder die Formhohlräume mit dem Druckkanal der Schmelze verbindenden Kanalsystem, das je Formhohlraum aus mindestens zwei Zuführkanälen besteht, die das rotierende Ventilglied während des Füllens des jeweiligen Formhohlraumes abwechselnd nacheinander öffnet und schließt, wodurch die mindestens zwei Schmelzeströme je Formhohlraum zumindest abschnittsweise in Schwingung bzw. Pulsation gelangen, so dass jeder Formhohlraum in zeitlich wechselnder Folge füllbar ist,
**dadurch gekennzeichnet,**
- **dass** für jedes zu dem bzw. den Formhohlräumen führende Kanalsystem lediglich ein rotierendes Ventilglied vorgesehen ist und
- das rotierende Ventilglied aus einer in der Spritzeinheit drehbar gelagerten Hohlspindel besteht, die mit dem Druckkanal der Schmelze verbunden ist und in der Ebene der zu dem bzw. den Formhohlräumen führenden Zuführkanäle mindestens einen radial nach außen verlaufenden Verteilerkanal aufweist, der ebenfalls mit dem Druckkanal verbunden ist.

2. Spritzeinheit nach Anspruch 1,
**dadurch gekennzeichnet,**
**dass** die Hohlspindel zwei radial nach außen verlaufende Verteilerkanäle aufweist, die nicht in dem selben Winkel wie die von ihnen mit Schmelze zu versorgenden Zuführkanäle zueinander angeordnet sind.

3. Spritzeinheit nach Anspruch 2,
**dadurch gekennzeichnet,**
**dass** die radial nach außen verlaufenden Verteilerkanäle in der Hohlspindel in unterschiedlichen Ebenen liegen.

## Claims

1. Injection unit with rotating valve element for the processing of fusible materials, having
- a melt pressure channel,
- one or more mould cavities and
- a channel system which connects the mould cavity or cavities to the melt pressure channel and consists of at least two feed channels per mould cavity which are opened and closed alternately one after the other by the rotating valve element during filling of the respective mould cavity, causing the at least two melt streams per mould cavity to be set in vibration or pulsation, at least in sections, so that each mould cavity can be filled in a sequence which changes with time,
**characterised in that**
- only one rotating valve element is provided for each channel system leading to the mould cavity or cavities and
- the rotating valve element consists of a hollow spindle, which is mounted in a rotatable manner in the injection unit, is connected to the melt pressure channel and has, in the plane of the feed channels leading to the mould cavity or cavities, at least one distribution channel running radially outwards which is likewise connected to the pressure channel.

2. Injection unit according to Claim 1,
**characterised in that**
the hollow spindle has two distribution channels running radially outwards which are not arranged at the same angle to one another as the feed channels to be supplied with melt by them.

3. Injection unit according to Claim 2,
**characterised in that**
the distribution channels running radially outwards lie in different planes in the hollow spindle.

## Revendications

1. Unité d'injection avec élément de vanne tournante pour le traitement de matériaux fusibles, comprenant
- un canal de métal sous pression,
- une ou plusieurs cavités de moule et
- un système de canal qui connecte la cavité ou les cavités de moule au canal de métal sous pression et qui est constitué d'au moins deux canaux d'alimentation par cavité de moule qui sont ouverts et fermés en alternance l'un après l'autre par l'élément de vanne tournante pendant le remplissage de la cavité de moule respective, faisant en sorte que les au moins deux courants de métal par cavité de moule soient mis en vibration ou pulsation, au moins dans des sections, de telle sorte que chaque cavité de moule puisse être remplie selon une séquence qui change dans le temps,
**caractérisée en ce que**
- seulement un élément de vanne tournante est prévu pour chaque système de canal conduisant à la cavité ou les cavités de moule et
- l'élément de vanne tournante est constitué d'un arbre creux qui est monté d'une manière tournante dans l'unité d'injection, est connecté au canal de métal sous pression et a, dans le plan des canaux d'alimentation conduisant à la cavité ou les cavités de moule, au moins un canal de distribution s'étendant radialement vers l'extérieur qui est pareillement connecté au canal de pression.

2. Unité d'injection selon la revendication 1, **caractérisée en ce que** l'arbre ceux comprend deux canaux de distribution s'étendant radialement vers l'extérieur qui ne sont pas agencés selon un angle l'un par rapport à l'autre qui serait le même que celui des canaux d'alimentation auxquels est appliqué le matériau fondu.

3. Unité d'injection selon la revendication 2, **caractérisée en ce que** les canaux de distribution s'étendent radialement vers l'extérieur dans des plans différents dans l'arbre creux.
